# EUROPEAN PATENT APPLICATION

(11) **EP 3 636 496 A1**
(43) Date of publication of application: **15.04.2020**
(21) Application number: 19189491.4
(22) Date of filing: 31.07.2019
(51) Int. Cl.: B60R 19/34

(54) **LAYOUT APPLIED TO BUMPERS OF AUTOMOTIVE VEHICLES**

(30) Priority: 08.10.2018 BR 202018070682 U
(71) Applicant: Aethra Sistemas Automotivos S/A, 32660-000 Minas Gerais Betim (BR)
(72) Inventor: SPORTELLI, PIETRO, 32686-190 Cidade de Betim (BR)
(74) Representative: Pereira da Cruz, Joao

(57) **Abstract**

The present invention comprises the bumper arrangement in the form of a new deformation element, which guarantees a high impact absorption efficiency, being formed by two half-bodies (2a, 2b) superimposed and welded laterally by welding (3) having an medium regular octagonal cross-section (4a, 4b, 4c) containing fully alternating pre-deformers (5a, 5b, 5c), the aspect ratio of which changes gradually, keeping its curve length constant as it is directed from the beam to the bulkhead plate (6). Said pre-deformers are disposed proportionally and progressively coupled, similarly on both sides of the bulkhead plate and the blade (7), in addition to the positive aspect ratio, with width maintained equal in relation to the longitudinal central axis of the deformation element (8).

## Description

### SUMMARY OF THE INVENTION

The present invention refers to the layout applied to bumpers of automotive vehicles in the form of a set of deformations introduced to the bumpers, resulting in a new profile with eight sides, manufactured in high resistance steels or aluminum, not restricted only to these materials, with progressively spaced and alternating pre-deformers. This allows the two (right and left) parts of the bumper assembly to be produced by the same tooling, reducing serial production costs, without compromising the robustness in deformation energy control and subsequent high efficiency of the impact absorption.

A typical bumper's performance is based on its ability to protect the vehicle. A typical deformation element design generally consists of two embossed halves, with a square or rectangular profile or section, overlapping, welded and fixed to the axial axis of the vehicle and, therefore, longitudinally to its usual direction of movement, being positioned at the front and at the rear of the vehicle. Thus, both the rear bumper and the front bumper in the conventional deformation assembly consist of a plastic part specific to each vehicle, a filler (foam), the beam (steel or equivalent), the deformation assembly (steel or aluminum) and the fixing plate (steel or equivalent), which are mounted on the rear or front and fixed to the vehicle's cantrails by any chosen method.

With the bumper deformation element mounted on the vehicle, its main task is to dissipate the energy that is absorbed in a controlled way during a collision between the vehicle and another object. The bumper deformation element must primarily absorb the kinetic energy resulting from collisions by plastic deformation, prevent intrusion into the passenger compartment and protect the fuel tank by minimizing forces acting on the vehicle during a collision, directly in the front or in the rear or as well obliquely from front or rear.

The increase in performance is achieved when the greater available volume of the deformation element is contributing to the absorption of impact energy in order to obtain a better distribution of the impact force on the vehicle cantrails. The association of multi-sided polygonal forms (hexagons, octagons, decagons, among others) with progressively spaced and alternating pre-deformers in the deformation assemblies has enabled a greater capacity of energy absorption and reduction of the component mass, therefore, improvements to the bumper deformation assemblies design are desirable.

This invention innovates the arrangement, presenting a layout applied to the impact bumper for motor vehicles which completely or in part satisfies the standards defined by the assemblers for the manufacture of bumpers in order to absorb the largest quantity of impact energy at the shortest possible distance, absorbing as much energy as possible with less mass, since minimizing the bumper impact mass has nowadays become mandatory due to restrictions on emission of gases.

This is an innovative section profile of the deformation element, which is formed from a regular eight-sided shape, which is maintained along the entire length with the existence of alternating pre-deformers. Thus, the pre-deformers make a smooth transition from the front portion to the rear portion of the deformation elements, adjusting in contact with the beam, compensating the longitudinal curvature existing in the front of modern vehicles.

### BRIEF DESCRIPTION OF FIGURES

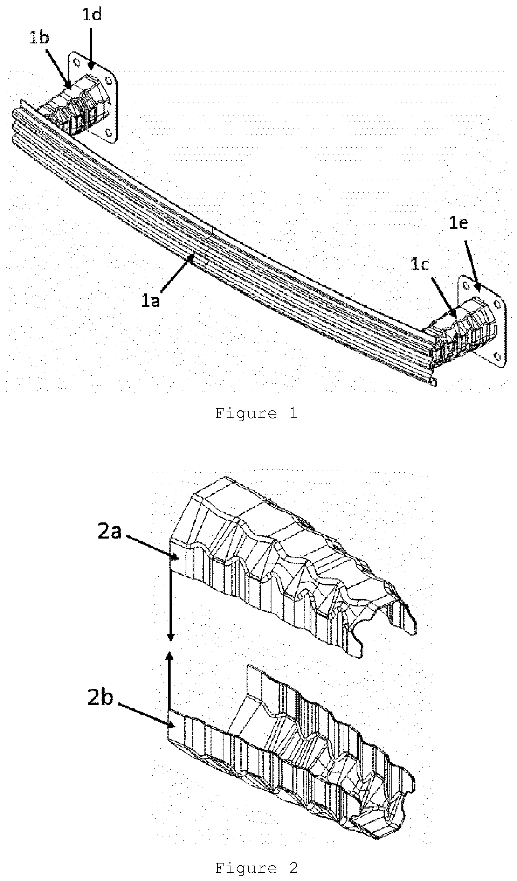

Fig. 1 is a perspective view of the bumper assembly fixed to the vehicle cantrail.
Fig. 2 is a perspective view of the two stamped halves of the bumper deformation element, illustrating their overlapping assembly.

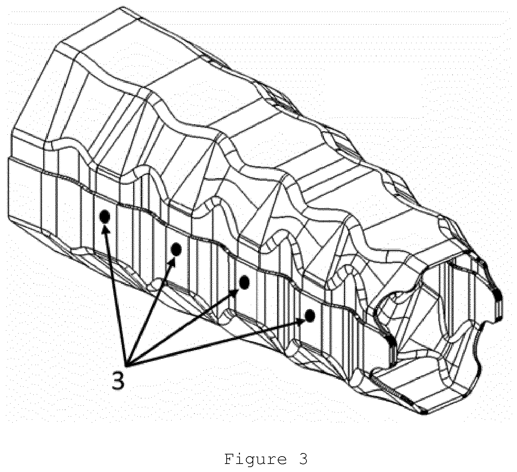

Fig. 3 is a perspective view showing the joining of the two stamped halves of the bumper deformation element.
Fig. 4 is a cross-sectional view showing the medium regular octagonal profile of the bumper deformation element.
Fig. 5 is a cross-sectional view showing the alternation of the normal direction of the pre-deformers of the deflection element of the bumper.
Fig. 6 is a longitudinal cross-sectional view illustrating the profile of the arrangement; the aspect ratio of each pre-deformer changes progressively while keeping the curve length constant through a cosine-shaped shape.

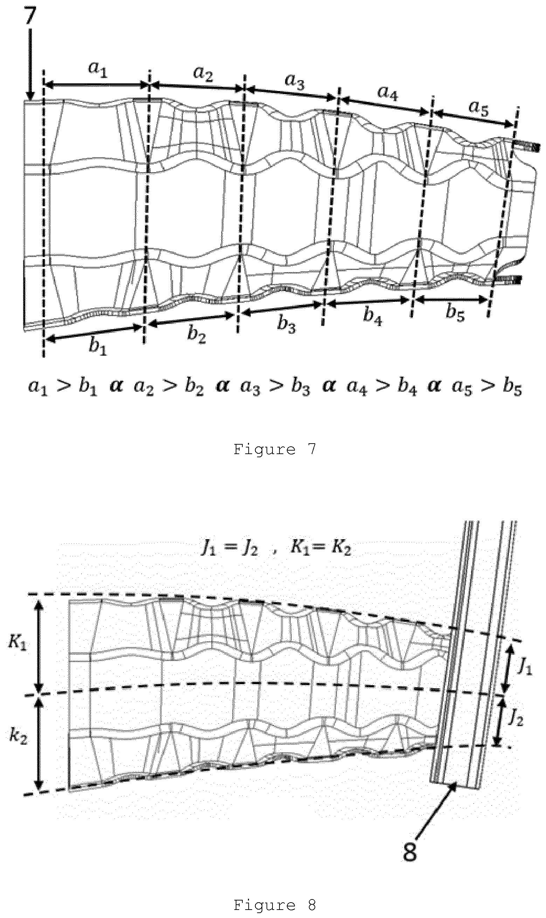

Fig. 7 is a longitudinal cross-sectional view showing a smooth transition from the front portion to the rear portion of the deformation element.
Fig. 8 is a longitudinal cross-sectional view showing the symmetrical growth of the width about the longitudinal axis of the deformation element in addition to the compensatory curvature of side loads.

### DETAILED DESCRIPTION

The motor vehicle bumper layout, subject of this invention, can be better understood by referring to the attached figures, which are included in this descriptive report and contain numerical references together with the description of their technical features. These figures do not restrict their configuration as to their dimensions, proportions and occasional types of finishing inserted nor the scope of their practical application.

According to the figures and their numerical references, the present invention relates to the layout applied to bumpers of automotive vehicles in the form of a deformation assembly (1b, 1c) which is constituted by a configuration with regular medium eight sides, which is kept along the entire length, with alternating pre-deformers. In the conventional assembly, they are responsible for joining the beam (1a) with the two bulkhead plates (1d, 1e), which are attached to the vehicle cantrails.

The deformation elements are formed by two laterally welded (3) overlapping semi-bodies (2a, 2b), a fact made possible by the shape and coupling characteristics, and this form of union is not restricted.

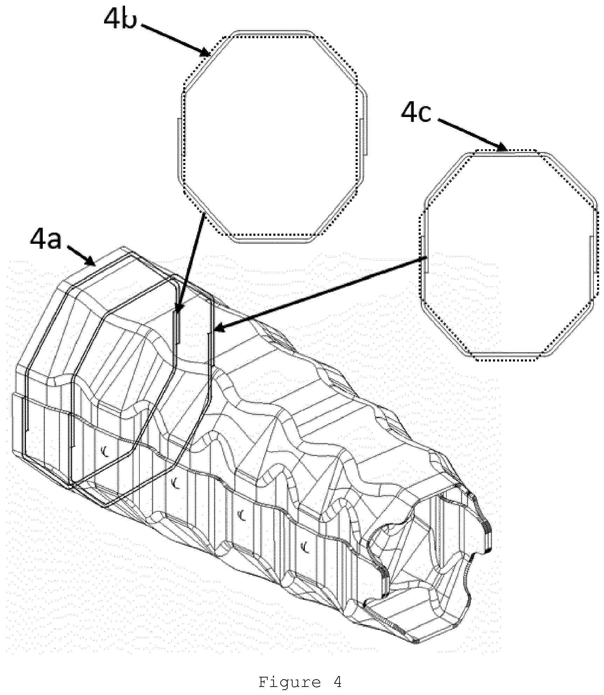

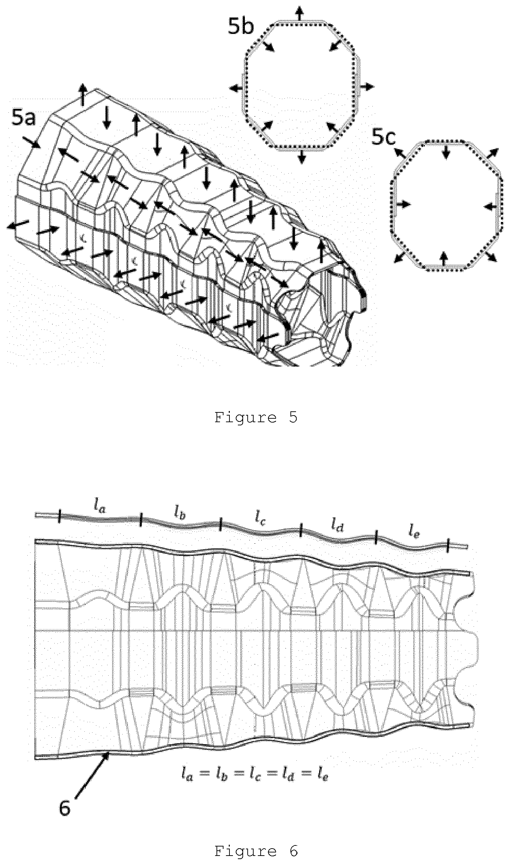

As shown in Figure 4, the cross-sectional view shows the medium regular octagonal profile (4d, 4b, 4c) which is kept along the entire length, with pre-deformers, that is, preformed structures to direct and control behavior during collapse of the deformation elements. As shown in Figure 5, the normal direction of the pre-deformers completely alternates from the front portion to the rear portion of the deformation elements (5a, 5b, 5c).

The perimeter of each pre-deformer, the distance that follows from crest to crest following the shape, is the same, meaning that the deeper pre-deformers are shorter and vice versa. This is ensured by the cosine form, which ensures a progressive change in the aspect ratio by employing constant curves of the same length for each of the pre-deformers, thus, optimizing energy absorption.

The pre-deformers are arranged progressively along the length of the deformation elements, being proportionally arranged along the compression axis (7), adjusting symmetrically both in contact with the bumper beam and with the bulkhead plate which is attached to the vehicle's cantrail.

Furthermore, the deformation element exhibits symmetrical growth of the width along the longitudinal axis (8), that is, it has smaller dimensions of width and height in the front portion (contact with the beam) than in the rear portion (contact with the bulkhead plate), not being restricted to this positive configuration, which may also be neutral (constant length and width dimensions along the length) or negative (inverse of the positive configuration described above), in order to adapt to and take advantage of the available space in contact with both the beam and the bulkhead plate.

## Claims

1. Layout applied to bumpers of automotive vehicles in the form of deformation elements, made of high-strength steels or aluminum, and not restricted to just these materials, **characterized in that** it has laterally welded (3) overlying semi-bodies (2a, 2b); with medium regular octagonal section (4a, 4b, 4c); containing fully alternating pre-deformers (5a, 5b, 5c), which have a cosine profile (6), maintaining a constant curve length; and proportional lateral progression (7); in addition to a value of equal width between both sides around the axis of longitudinal (8) symmetry, with positive configuration, said configuration being smaller width at the junction with the beam than with the bulkhead plate.

2. Layout according to claim 1 wherein pre-deformers with neutral configuration, said neutral configuration being constant dimensions of width and height along the length or negative configuration.
